# EUROPÄISCHE PATENTANMELDUNG

(11) **EP 1 707 693 A2**
(43) Veröffentlichungstag der Anmeldung: **04.10.2006**
(21) Anmeldenummer: 06004580.4
(22) Anmeldetag: 07.03.2006
(51) Int. Cl.: E03C 1/04

(54) **Wasserbehandlungseinheit zum Anschluss an einem Wasserhahn.**

(30) Priorität: 11.03.2005 DE 102005011763
(71) Anmelder: Aqua Carat GmbH, 72622 Nürtingen (DE)
(72) Erfinder:
(74) Vertreter: Kohler Schmid Möbus

(57) **Zusammenfassung**

Wasserbehandlungseinheit zum Anschließen an einen Wasserhahn, mit einem Anschlussstück (1), einem dieses umgebenden Gehäuse (2), mit einem Anschluss (3) für den Wasserhahn, mit mindestens einem ersten Auslass (4,7) für zu behandelndes Wasser sowie mit mindestens einem Einlass (5,9) für behandeltes Wasser und einem weiteren Auslass (10) für behandeltes Wasser, ist dadurch gekennzeichnet, dass das Gehäuse (2) des Anschlussstückes (1) mit mindestens zwei räumlich voneinander getrennten weiteren Gehäusen (11,14) verbunden ist, die jeweils eine Wasserbehandlungskammer (6,8) enthalten. Hierdurch können auch größere Wassermengen direkt am Wasserhahn universell behandelt werden.

## Beschreibung

Die Erfindung betrifft Anschlussstück zum Anschließen einer Wasserbehandlungseinheit an einen Wasserhahn, mit einem das Anschlussstück umgebenden Gehäuse, mit einem Anschluss für den Wasserhahn, mit mindestens einem ersten Auslass für zu behandelndes Wasser sowie mit mindestens einem Einlass für behandeltes Wasser und einem weiteren Auslass für behandeltes Wasser.

Eine im Auslauf eines Wasserhahns integrierte Filtereinheit ist aus DE 200 16 860 U1 bekannt. Das zu behandelnde Wasser wird durch einen Auslass in eine Wasserbehandlungskammer geleitet. Nach der Wasserbehandlung wird das behandelte Wasser über einen Auslass dem Verbraucher zugeführt. Die bekannte Filtereinheit besitzt jedoch lediglich ein begrenztes Volumen. Zudem ist der Austausch des Filters schwierig.

Weitere an einen Wasserhahn montierbare Wasserbehandlungsgeräte sind in DE 102 16 847 A1 und EP 0 749 346 B1 beschrieben.

Nachteilig bei den bekannten Wasserbehandlungsgeräten ist, dass für die Wasserbehandlung entweder nur ein einziges Mittel zur Wasserbehandlung zur Verfügung steht, oder aber mehrere Mittel zur Wasserbehandlung in einer Wasserbehandlungskammer angeordnet sind, wie bspw. in EP 0749 346 B1 beschrieben. Letzteres begrenzt jedoch die Durchflussmenge des zu behandelnden Wassers erheblich. Darüber hinaus ist in der aus EP 0749 346 B1 bekannten Vorrichtung eine Trenneinheit zwischen den unterschiedlichen Behandlungsmedien vorgesehen, was mit zusätzlichen Kosten verbunden ist und gleichzeitig den Druckabfall durch die Vorrichtung erhöht. Darüber hinaus ist es bei einer Anordnung von mehreren Behandlungsmedien innerhalb einer Wasserbehandlungskammer nicht möglich, einzelne Behandlungsmedien auszutauschen, wenn diese zu unterschiedlichen Zeiten erschöpft sind.

Aufgabe der vorliegenden Erfindung ist daher, oben genannte Nachteile zu vermeiden und ein Anschlussstück der eingangs genannten Art vorzuschlagen, mit dessen Hilfe auch größere Wassermengen direkt am Wasserhahn universell behandelt werden können.

Diese Aufgabe wird erfindungsgemäß überraschend einfach dadurch gelöst, dass das Gehäuse des Anschlussstückes mit mindestens zwei räumlich voneinander getrennten weiteren Gehäusen verbunden ist, die jeweils eine Wasserbehandlungskammer enthalten.

Dadurch ist es einerseits möglich, gleichzeitig verschiedene Wasserbehandlungen am Wasserhahn durchzuführen und zudem einzelne Behandlungseinheiten bei Bedarf auf einfache Art und Weise auszutauschen. Der Austausch der einzelnen Behandlungseinheiten kann beispielsweise über Steckverbindungen oder über Bajonettanschlüsse erfolgen. Andererseits besteht die Möglichkeit, die Austauschintervalle zu verlängern, indem mindestens zwei Wasserbehandlungskammern das gleiche Medium zur Behandlung von Wasser enthalten.

Bei einer bevorzugten Ausführungsform der Erfindung sind Mittel vorgesehen, die ein sukzessives Durchströmen der mindestens zwei Wasserbehandlungskammern ermöglichen. Dadurch ist eine mehrstufige Wasserbehandlung mit hohem Wirkungsgrad realisierbar.

Bei einer vorteilhaften Weiterbildung dieser Ausführungsform ist der erste Auslass des Anschlussstückes für zu behandelndes Wasser mit einem Einlass der in Strömungsrichtung des Wassers ersten Wasserbehandlungskammer verbunden. Ein Auslass der ersten Wasserbehandlungskammer ist über einen Kanal im Anschlussstück direkt mit einem Einlass der zweiten Wasserbehandlungskammer verbunden usw., und schließlich ist ein Auslass der zuletzt durchströmten Wasserbehandlungskammer mit dem Einlass des Anschlussstückes für behandeltes Wasser verbunden. Dadurch ist eine besonders kompakte und einfache Bauweise des Anschlussstückes realisierbar.

Bei einer weiteren vorteilhaften Ausführungsform sind Mittel zum parallelen Durchströmen der mindestens zwei Wasserbehandlungskammern vorgesehen. Dadurch werden größere Durchflüsse des zu behandelnden Wassers ermöglicht.

Bei einer Weiterbildung dieser Ausführungsform ist je ein erster Auslass des Anschlussstückes für zu behandelndes Wasser mit je einem Einlass der mindestens zwei Wasserbehandlungskammern verbunden, und je ein Auslass der mindestens zwei Wasserbehandlungskammern ist mit je einem Einlass des Anschlussstückes für behandeltes Wasser verbunden. Damit ist eine besonders einfache und kostengünstige Bauweise des Anschlussstückes möglich.

Bei einer vorteilhaften Ausgestaltung der Erfindung umfassen die weiteren Gehäuse der mindestens zwei Wasserbehandlungskammern Anschlüsse von unterschiedlicher Bauart an das Anschlussstück. Es können beispielsweise unterschiedliche Bajonettanschlüsse oder unterschiedliche Steckverbindungen vorgesehen sein. Dadurch wird vermieden, dass die verschiedenen Wasserbehandlungskammern am falschen Anschluss an das Anschlussstück angeschlossen werden. Dies ist besonders wichtig bei mehrstufigen Wasserbehandlungen, bei denen die Reihenfolge der einzelnen Behandlungsstufen in der Regel nicht beliebig ist.

Bei einer weiteren vorteilhaften Ausführungsform sind die weiteren Gehäuse und die Anschlüsse der mindestens zwei Wasserbehandlungskammern baugleich. Die weiteren Gehäuse der Wasserbehandlungskammern können somit unabhängig von der Art des darin befindlichen Behandlungsmittels an jeden Anschluss am Anschussstück angeschlossen werden. Dies spart Kosten, weil ein und dasselbe Bauteil universell einsetzbar ist.

Hierbei ist es vorteilhaft, wenn sich an den weiteren Gehäusen oder an deren Anschlüssen jeweils eine Markierung befindet. Dadurch wird vermieden, dass insbesondere nicht rotationssymmetrische Wasserbehandlungskammern in einer verdrehten Position an das Anschlussstück angeschlossen werden, so dass das Wasser in falscher Richtung oder gar nicht durch die Wasserbehandlungskammer fließt. Als Markierung sind beispielsweise ein Pfeil, eine Einkerbung oder aber ein Zapfen denkbar.

Bei einer weiteren vorteilhaften Ausgestaltung der Erfindung enthalten die Wasserbehandlungskammern wasserundurchlässige Trennwände zur Umlenkung des Wasserstromes innerhalb der Wasserbehandlungskammer. Dadurch ist es möglich, den Wasserstrom innerhalb der Wasserbehandlungskammer so umzulenken, dass das Wasser nicht auf dem kürzesten Weg durch die Wasserbehandlungskammer fließt. Eine längere Verweildauer des Wassers in der Wasserbehandlungskammer bewirkt einen verbesserten Wirkungsgrad.

Bei einer bevorzugten Ausführungsform der Erfindung enthalten die Wasserbehandlungskammern Silber oder mit Silber beschichtete Werkstoffe. Silber wirkt keimtötend und verhindert eine Verkeimung der Wasserbehandlungskammer besonders in Stagnationsphasen, wenn kein Wasser fließt. Eine mögliche Veralgung der Wasserbehandlungskammer bei Lichtzutritt wird durch die Anwesenheit von Silber ebenfalls unterbunden.

Vorteilhafterweise sind Deckel für die Anschlüsse der Wasserbehandlungskammern vorgesehen, mit denen die weiteren Gehäuse der Wasserbehandlungskammern verschlossen werden können. Diese Deckel dienen als Schutzkappe für Wechsel- und Ersatzkartuschen und schützen diese bei Lagerung vor Umwelteinflüssen wie Feuchtigkeit oder Staub.

Bei einer besonders vorteilhaften Ausführungsform der Erfindung sind zwei weitere Gehäuse mit jeweils einer Wasserbehandlungskammer in gegenüberliegenden Positionen und jeweils rechtwinklig zum Anschluss des Anschlussstückes für den Wasserhahn und zum Auslass des Anschlussstückes für behandeltes Wasser mit dem Anschlussstück verbunden. Diese Anordnung ist aus Platzgründen besonders günstig, weil ein freier Zugang zum ausfließenden Wasser möglich ist. Außerdem ist durch diese Anordnung der Wasserbehandlungskammern eine symmetrische formschöne Ausgestaltung möglich.

Bei einer vorteilhaften Ausgestaltung der Erfindung enthalten die Wasserbehandlungskammern eine oder mehrere Filtereinheiten. Diese können beispielsweise ein Adsorptionsmittel, insbesondere Aktivkohle enthalten. Ebenso ist es möglich, dass die Filtereinheiten ein Keramik-, Sand- und/oder Cellulosefilter umfassen. Damit ist eine zusätzliche Reinigung des Wassers, aber auch die Eliminierung unerwünschter Geruchsstoffe wie beispielsweise Chlor möglich.

Bei einer weiteren Ausführungsform enthalten die Wasserbehandlungskammern ein Ionenaustauschermaterial. Dadurch können unerwünschte Ionen gezielt entfernt werden. Durch Austausch von Calcium- und Magnesium-Ionen gegen Natrium-Ionen kann hartes Wasser enthärtet werden.

Prinzipiell ist es auch möglich, dass in den Wasserbehandlungskammern Mittel zur Desinfektion und/oder zum Keimschutz integriert sind. Diese können zum Beispiel eine UV-Lampe, Silber bzw. versilberte Werkstoffe oder aber eine chemische Desinfektion sein. Sinnvoll ist auch der Einsatz einer Membran oder eines Hohlfasermoduls zur Mikro-, Ultra- oder Nanofiltration bzw. eine Umkehrosmoseeinheit.

Bei einer weiteren vorteilhaften Ausführungsform enthalten die Wasserbehandlungskammern Edelsteine und/oder Halbedelsteine oder Kombinationen verschiedener Edelsteine und/oder Halbedelsteine. Aus der Steinheilkunde ist bekannt, dass Edelsteine als Heilsteine dienen und die Eigenschaften des Wassers positiv beeinflussen können.

Bei einer weiteren bevorzugten Ausführungsform sind die weiteren Gehäuse der Wasserbehandlungskammern zumindest teilweise aus einem transparenten Werkstoff, wie z.B. bruchfestem Glas, Trogamid oder Plexiglas, gefertigt. Dadurch ist der Zustand der Mittel zur Wasserbehandlung sichtbar, so dass die Wasserbehandlungseinheit rechtzeitig gewechselt werden kann. Außerdem führt der transparente Werkstoff zu einer optischen Aufwertung der Gesamtarmatur, beispielsweise, wenn sich in der Wasserbehandlungskammer eine Schüttung aus Edelsteinen befindet.

Schließlich ist es auch möglich, dass die einzelnen Wasserbehandlungskammern unterschiedliche Arten von Wasserbehandlungsmittel enthalten. Dadurch sind mehrstufige Behandlungen, beispielsweise eine Filtration in Verbindung mit einer Enthärtung möglich.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:

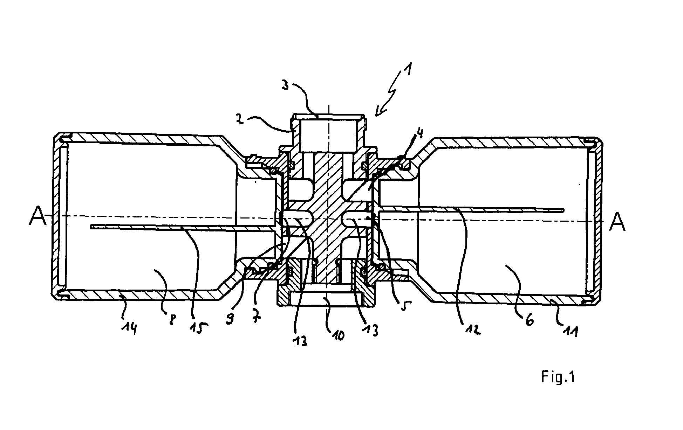

**Fig. 1** einen schematischen Vertikalschnitt durch eine Ausführungsform der erfindungsgemäßen Vorrichtung mit zwei Wasserbehandlungskammern.

Das in **Fig.1** gezeigte Anschlussstück **1** umfasst ein Gehäuse **2,** einen Anschluss **3** für einen in der Abbildung nicht dargestellten Wasserhahn, zwei erste Auslässe **4, 7** für in einer ersten **6** beziehungsweise zweiten Wasserbehandlungskammer **8** zu behandelndes Wasser, einen Einlass **5** für in der ersten Wasserbehandlungskammer 6 behandeltes Wasser, einen Einlass **9** für in der zweiten Wasserbehandlungskammer 8 behandeltes Wasser sowie einen weiteren Auslass **10** für behandeltes Wasser, durch den das behandelte Wasser die Anordnung verlässt.

Das Wasser strömt über eine mit dem Anschluss 3 dicht verbundene, in der Abbildung nicht näher dargestellte Wasserarmatur in das Anschlussstück 1 und fließt von dort über den ersten Auslass 4 in die von einem weiteren Gehäuse 11 umgebende erste Wasserbehandlungskammer 6.

Die Wasserbehandlungskammer 6 kann beispielsweise mit Aktivkohle, lonenaustauschermaterial oder mit Edelsteinen gefüllt sein.

Innerhalb der ersten Wasserbehandlungskammer 6 strömt das Wasser um eine wasserundurchlässige Trennwand **12** herum und über den Einlass 5 zurück in das Anschlussstück 1. Der Einlass 5 ist über einen Kanal **13** innerhalb des Anschlussstückes 1 direkt mit dem Auslass 7 verbunden. Von dort strömt das Wasser in die von einem Gehäuse **14** umgebende zweite Wasserbehandlungskammer **8.**

Die Wasserbehandlungskammer 8 kann entweder mit demselben Material wie die erste Wasserbehandlungskammer 6 gefüllt sein, oder aber ein anderes Mittel zur Wasserbehandlung enthalten. Es besteht auch die Möglichkeit, mehrere Wasserbehandlungsmöglichkeiten in Kombination in den einzelnen Wasserbehandlungskammern 6, 8 zu integrieren.

Das Wasser fließt in der Wasserbehandlungskammer 8 wiederum um eine wasserundurchlässige Trennwand 15 herum und über den Einlass 9 zurück in das

Anschlussstück 1. Das in den beiden Wasserbehandlungskammern 6, 8 behandelte Wasser verlässt das Anschlussstück 1 schließlich über den weiteren Auslass 10.

Die beiden weiteren Gehäuse 11, 14 der Wasserbehandlungskammern 6, 8 sind in gegenüberliegenden Positionen am Anschlussstück 1 angeordnet, so dass ein freier Zugang zum aus dem weiteren Auslass 10 ausfließenden Wasser möglich ist.

Bei der in Fig. 1 dargestellten Ausführungsform sind die weiteren Gehäuse 11, 14 sowie deren Anschlüsse baugleich und können somit jeweils an beide Anschlüsse am Anschlussstück 1 angeschlossen werden. Dabei ist jedoch zu beachten, dass die Wasserbehandlungskammern 6, 8 aufgrund der Trennwände 12, 15 nicht rotationssymmetrisch und um 180° entlang einer Achse A-A gegeneinander verdreht sind. Ein Verdrehen des weiteren Gehäuses 11 um 180° entlang der Achse A-A würde beispielsweise bewirken, dass das Wasser über den ersten Auslass 4 in die Wasserbehandlungskammer 6 strömt und von dort auf direktem Wege über den Einlass 5 zurück in das Anschlussstück 1 fließt. Das Wasser wird dann nicht mittels der Trennwand 12 durch die komplette Wasserbehandlungskammer 6 geleitet. Dies würde die Wirkung der Wasserbehandlung erheblich schwächen. Eine in der Abbildung nicht dargestellte Markierung an den weiteren Gehäusen 11, 14 kann einen Anschluss der Wasserbehandlungskammern 6, 8 in verdrehter Position verhindern.

### Bezugszeichenliste

- 1: Anschlussstück
- 2: Gehäuse des Anschlussstückes
- 3: Anschluss für einen Wasserhahn
- 4: erster Auslass für das in der ersten Wasserbehandlungskammer zu behandelnde Wasser
- 5: Einlass für in der ersten Wasserbehandlungskammer behandeltes Wasser
- 6: erste Wasserbehandlungskammer
- 7: erster Auslass für das in der zweiten Wasserbehandlungskammer zu behandelnde Wasser
- 8: zweite Wasserbehandlungskammer
- 9: Einlass für das in der zweiten Wasserbehandlungskammer behandelte Wasser
- 10: weiterer Auslass für behandeltes Wasser
- 11: weiteres Gehäuse (erste Wasserbehandlungskammer)
- 12: Trennwand
- 13: Kanal
- 14: weiteres Gehäuse (zweite Wasserbehandlungskammer)
- 15: Trennwand

## Patentansprüche

1. Anschlussstück (1) zum Anschließen einer Wasserbehandlungseinheit an einen Wasserhahn, mit einem das Anschlussstück (1) umgebenden Gehäuse (2), mit einem Anschluss (3) für den Wasserhahn, mit mindestens einem ersten Auslass (4, 7) für zu behandelndes Wasser sowie mit mindestens einem Einlass (5, 9) für behandeltes Wasser und einem weiteren Auslass (10) für behandeltes Wasser,
**dadurch gekennzeichnet,**
**dass** das Gehäuse (2) des Anschlussstückes (1) mit mindestens zwei räumlich voneinander getrennten weiteren Gehäusen (11,14) verbunden ist, die jeweils eine Wasserbehandlungskammer (6, 8) enthalten.

2. Anschlussstück nach Anspruch 1, **dadurch gekennzeichnet, dass** Mittel vorgesehen sind, die ein sukzessives Durchströmen der mindestens zwei Wasserbehandlungskammern (6, 8) ermöglichen; und dass der erste Auslass (4) des Anschlussstückes für zu behandelndes Wasser mit einem Einlass der in Strömungsrichtung des Wassers ersten Wasserbehandlungskammer (6) verbunden ist, ein Auslass der Wasserbehandlungskammer (6) über einen Kanal (13) im Anschlussstück (1) direkt mit einem Einlass der zweiten Wasserbehandlungskammer (8) verbunden ist usw. und schließlich ein Auslass der zuletzt durchströmten Wasserbehandlungskammer mit dem Einlass (9) des Anschlussstückes (1) für behandeltes Wasser verbunden ist.

3. Anschlussstück nach Anspruch 1, **dadurch gekennzeichnet, dass** Mittel zum parallelen Durchströmen der mindestens zwei Wasserbehandlungskammern (6, 8) vorgesehen sind, und dass je ein erster Auslass (4, 7) des Anschlussstückes (1) für zu behandelndes Wasser mit je einem Einlass der mindestens zwei Wasserbehandlungskammern (6, 8) verbunden ist und je ein Auslass der mindestens zwei Wasserbehandlungskammern (6, 8) mit je einem Einlass (5, 9) des Anschlussstückes (1) für behandeltes Wasser verbunden ist.

4. Anschlussstück nach einem der vorhergehenden Ansprüche, **dadurch gekennzeichnet, dass** die weiteren Gehäuse (11, 14) und die Anschlüsse der mindestens zwei Wasserbehandlungskammern (6, 8) baugleich sind.

5. Anschlussstück nach Anspruch 4, **dadurch gekennzeichnet, dass** an den weiteren Gehäusen (11, 14) oder an deren Anschlüssen jeweils eine Markierung angebracht ist.

6. Anschlussstück nach einem der vorhergehenden Ansprüche, **dadurch gekennzeichnet, dass** die Wasserbehandlungskammern (6, 8) wasserundurchlässige Trennwände (12, 15) zur Umlenkung des Wasserstromes innerhalb der Wasserbehandlungskammer (6, 8) enthalten.

7. Anschlussstück nach einem der vorhergehenden Ansprüche, **dadurch gekennzeichnet, dass** die Wasserbehandlungskammern (6, 8) Silber oder mit Silber beschichtete Werkstoffe enthalten.

8. Anschlussstück nach einem der vorhergehenden Ansprüche, **dadurch gekennzeichnet, dass** Deckel für die Anschlüsse der Wasserbehandlungskammern (6 ,8) vorgesehen sind, mit denen die weiteren Gehäuse (11, 14) der Wasserbehandlungskammern (6, 8) verschlossen werden können.

9. Anschlussstück nach einem der vorhergehenden Ansprüche, **dadurch gekennzeichnet, dass** zwei weitere Gehäuse (11, 14) mit jeweils einer Wasserbehandlungskammer (6 ,8) in gegenüberliegenden Positionen und jeweils rechtwinklig zum Anschluss (3) des Anschlussstückes (1) für den Wasserhahn und zum Auslass (10) des Anschlussstückes (1) für behandeltes Wasser mit dem Anschlussstück (1) verbunden sind.

10. Anschlussstück nach einem der vorhergehenden Ansprüche, **dadurch gekennzeichnet, dass** die Wasserbehandlungskammern (6, 8) eine oder mehrere Filtereinheiten enthalten.

11. Anschlussstück nach einem der vorhergehenden Ansprüche, **dadurch gekennzeichnet, dass** in den Wasserbehandlungskammern (6, 8) Mittel zur Desinfektion und/oder zum Keimschutz integriert sind, und dass die Mittel zum Keimschutz eine Membran oder ein Hohlfasermodul umfassen.

12. Anschlussstück nach einem der vorhergehenden Ansprüche, **dadurch gekennzeichnet, dass** die Wasserbehandlungskammern (6, 8) Edelsteine und/oder Halbedelsteine oder Kombinationen verschiedener Edelsteine und/oder Halbedelsteine enthalten.

13. Anschlussstück nach einem der vorhergehenden Ansprüche, **dadurch gekennzeichnet, dass** die einzelnen Wasserbehandlungskammern (6, 8) unterschiedliche Arten von Wasserbehandlungsmittel enthalten.
